# EUROPEAN PATENT APPLICATION

(11) **EP 1 022 010 A1**
(43) Date of publication of application: **26.07.2000**
(21) Application number: 99911822.7
(22) Date of filing: 09.04.1999
(51) Int. Cl.: A61G 21/00, B60P 3/34

(54) **MOBILE MORGUE**

(30) Priority: 24.04.1998 ES 9800880
(71) Applicant: Interpyramid, S.A., 47001 Valladolid (ES)
(72) Inventor: BECENAS NIETO, Moises, E-47001 Valladolid (ES)
(74) Representative: Pons Arino, Angel
(86) International application number: PCT/ES99/00092
(87) International publication number: WO 99/55279

(57) **Abstract**

Mobile morgue comprising a trailer which is closed by means of its body and having major extensible sides; the inside of the trailer which forms a mobile unit is divided into three compartments; a cooled compartment at one extremity which is independent from the other two compartments and having an external side access door; the coffin is placed in said cooled compartment and is visible through an extremity internal window; the other two compartments define the area where the body has opposite extensible sides; one of said two compartments forms an extremity of the mobile unit and can be accessed by the rear end of the unit through a staircase and a ramp which can both rotate in this structure or frame.

## Description

The subject of the present invention is a mobile funeral home.

As State of the Art it can be said that at the present time mobile chapels of rest are unknown and not in use.

The absence of mobile chapels of rest means that the inhabitants of small towns and villages have great problems in rendering the necessary services to a deceased person.

The mobile funeral home is simple in construction and moreover is extremely practical when it comes to providing a full and complete service to the dead and to their relatives and friends. Moreover, its practical nature means that the said funeral home can be moved in a short space of time to the dwelling or place where the deceased is to be found.

In accordance with the invention, the mobile funeral home comprises a chassis of a semi-trailer having two axles on which is located a coachwork with an extensible system for expansion by the large sides which make it possible to gain sufficient space for accommodating the services offered by this type of funerary installation.

The layout of these services is divided into three well-defined regions: an end compartment reserved for the deceased, another which defines a room for the immediate family and a third compartment which is a room of larger capacity than the previous one for relatives and friends. The toilets and the coffee area are situated in this last room.

Hence the mobile funeral home as a unit consists of: a structure, a refrigerated room for the deceased, a room for close relatives and another room called public room.

As for the structure, it can be said that the upper front part of the coachwork is located in the refrigeration unit. This unit will have two functions: refrigerating the deceased's room, keeping the temperature permanently below 5° Centigrade, and functioning as an air-conditioning system, whenever required, in the rest of the rooms. It will be powered by an electric motor in order to avoid the noise which a motor of another type might produce.

In addition, it will have the corresponding switchboard available, which can be actuated from outside the vehicle.

In the rear part of the semi-trailer, and by way of extending the space, the option is offered of mounting a removable entrance way, formed by a metal structure covered by canvas.

Under the chassis will be installed:
- an electric heating system, which will send heat into the rooms through the floor of the coachwork.
- an electrical power converter system.
- a set of electric motors which will actuate the extraction and insertion of the retractable compartments of the trailer by means of a rack-and-pinion mechanism.

The said compartments will make it possible to extend the internal space available up to a total of four and a half metres in width.
- The retractable legs which are situated at the rear part of the trailer will confer greater stability on the mobile unit while the compartments are being extended.

In the rest of the space available under the chassis, a set of compartments will be fitted in which it will be possible to locate the removable elements of the interior furnishing, as well as the various tools required for the services by the undertakers.

In the roof of the coachwork will be arranged three skylights, with the option of sliding a Venetian blind under them, which will allow natural illumination of the interior if required, as well as ventilators for refreshing the air in the rooms and the cloakroom or toilets of the public room.

As for the refrigerated room, this is where the deceased will rest, as was stated above. It will be of sufficient dimensions to contain the deceased in any position. Access to it will be from the outside, through an airtight door. The interior temperature will never exceed 5° Centigrade, thanks to the abovementioned refrigeration system.

The coffin will enter and exit by means of an internal fold-away platform hoist. A curtain will prevent the platform being seen from the window of the close-relatives' room. The said window will be airtight with an air gap of 15 millimetres between panes of glass to prevent the temperature difference between the rooms misting it over. In addition, an opaque Venetian blind fitted in it will allow the undertaker's personnel to handle the bier without being seen from the inside.

A system will also be installed for hanging up four wreaths on the front part of the chamber.

The lighting will be of the type found in churches.

As for the relatives' room, it is situated in the space immediately behind the abovementioned refrigerated room, and will be separated from the other room by a solid wall which will be supplemented with a partition of concertina-type strips which will be extended automatically when the semi-trailer is extended. It will additionally have two large, wide windows and appropriate Venetian blinds.

Ample, comfortable furniture will be made available for the people present inside.

Illumination will be provided by incandescent or fluorescent lamps, as considered most appropriate.

Several loudspeakers hidden in the roof will make it possible to create a fitting musical environment, if desired.

The public room will have a door which communicates with the close-relatives' room.

The public room will have a toilet with water and a washbasin, and will also have a small coffee area and a refrigerator.

The accommodation will be equipped with ample, comfortable furniture.

The mobile unit is complemented by an access stairway through the rear part, and it will have hinges in its central part so that it can be dropped down and housed within the semi-trailer.

With the aim of a better understanding not only of the construction but also of the specific use of the mobile funeral home of the invention, a practical embodiment example is referred to below, this implementation being merely illustrative and not In any way a limitation thereof, all as depicted on the attached drawings; in which;

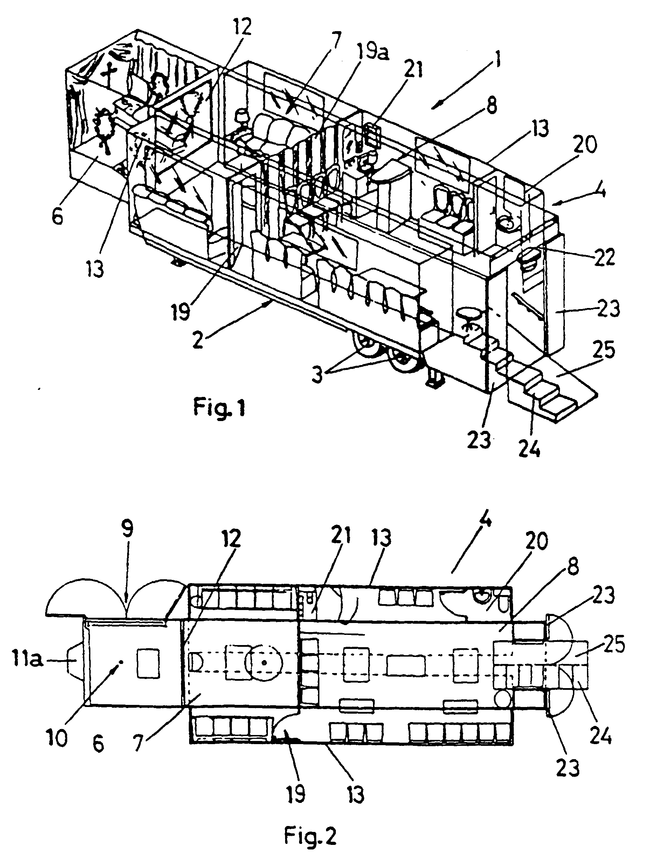

Figure 1 shows a perspective view of the mobile funeral home of the invention.
Figure 2 shows a plan view of Figure 1.

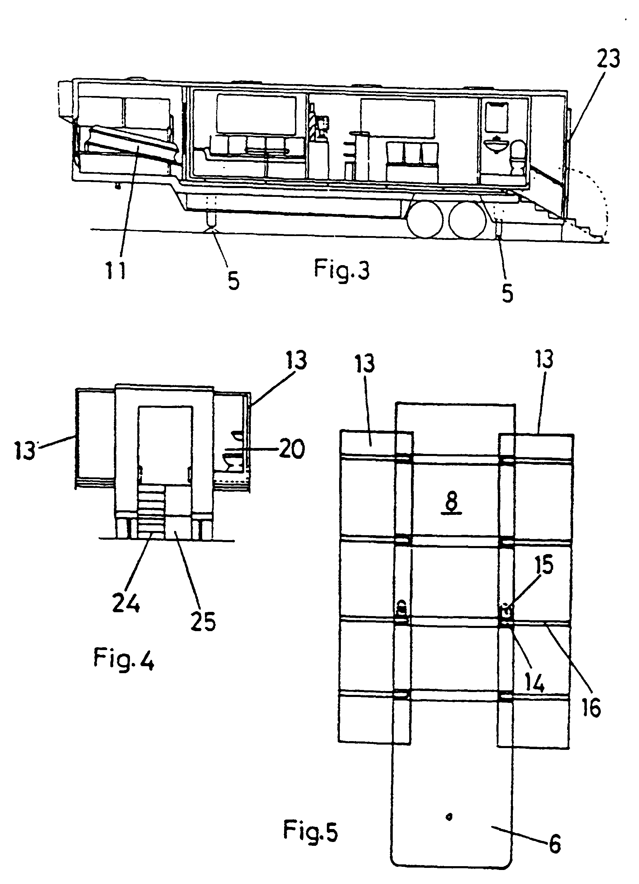

Figure 3 shows a front elevation of Figure 1.
Figure 4 shows a side view of Figure 1.
Figure 5 shows a plan view of the structural arrangement and of guides which allow the sides to extend.

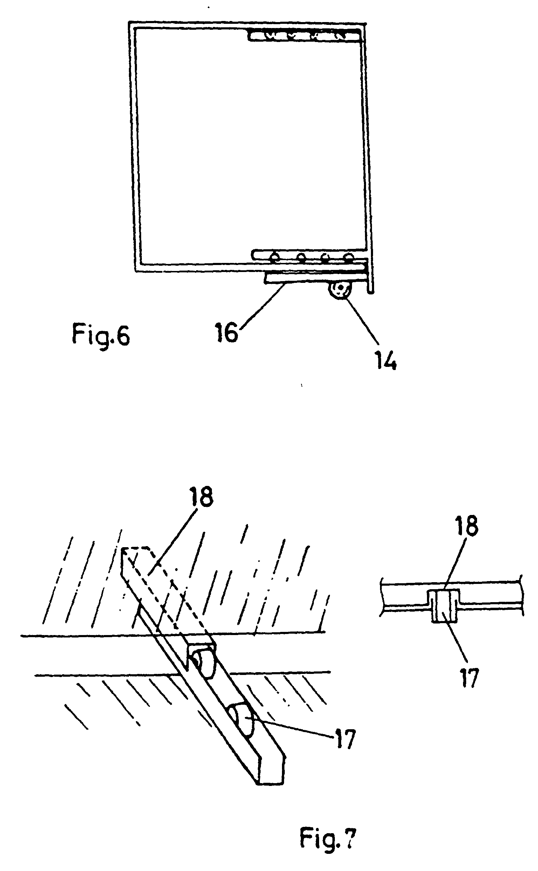

Figure 6 shows a side view of the two sides of the coachwork, closed.

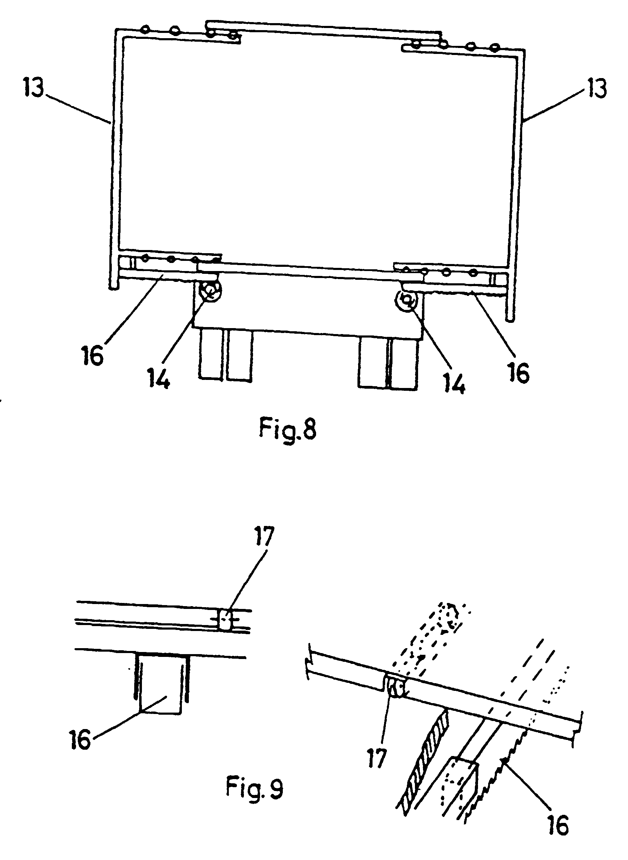

Figure 7 shows a detail of the upper guides which allow the sides to be moved.
Figure 8 shows a side view of the two sides of the coachwork, opened out.
Figure 9 shows a detail of the lower guides and of the rack-and-pinion transmission which causes the opening and closing movement of the sides of the coachwork.

The mobile funeral home 1 comprises a semi-trailer 2 with two axles 3 which includes a wedge-shaped coachwork 4 and two retractable legs 5 which give stability to the mobile unit.

The mobile unit consists of: a refrigerated room 6, a close-relatives' room 7 and a public room 8.

The refrigeration room 6 has an access door 9, and the bier 11 is situated in the central area 10. This room is refrigerated by the appropriate and necessary means 11a.

A glazed window 12 can be seen in the room 6.

This window is covered by an interior Venetian blind.

The interior decoration is based on curtains, and moreover has means for hanging wreaths inside it.

The rooms 7 and 8 have movable sides 13 and, moreover, mechanically, the movement takes place via a rack-and-pinion mechanism, the pinion 14 being actuated by a motor 15 and moving the rack 16 which is fixed to the movable part of the corresponding side.

The movement of the sides 13 is guided in both directions by means of guide rollers 17 of the movable part which slide on guides 18 of the fixed part.

The equipment and furnishings of the rooms 7 and 8 can be varied. These rooms communicate with a door 19 and a concertina-type partition 19a.

The room 8 has available, in one of its extractable parts, a toilet and a washbasin 20 as well as a small coffee area 21.

The rear part 22 of the unit has a double-leaf door 23 which allows a staircase 24 and a ramp 25, which have hinges for rotating them, to be dropped down and positioned on the ground.

## Claims

1. Mobile funeral home; characterized in that it comprises a semi-trailer closed by means of its coachwork which has extensible large sides; the interior of the semi-trailer, which constitutes a mobile unit, is divided into three compartments; one refrigerated end compartment, independent of the other two, with an external side door for access, which is where the bier is located, which is visible through an internal end window, and the other two remaining compartments define the area in which the coachwork has its extensible, opposing sides; one of these compartments, the end one, has an access through the rear end of the unit via a staircase and a ramp, both of which can be rotated in the structure or chassis.

2. Mobile funeral home according to Claim 1, characterized in that, in the structure of the chassis of the semi-trailer, motors are arranged which actuate a rack-and-pinion mechanism, each rack being mounted in the movable part of the side, and, moreover, the said sides, in their movement, are guided above and below by guides with wheels which move on opposing guides in the fixed part of the coachwork.

3. Mobile funeral home according to either of the preceding claims, characterized in that the separation between the two end compartments which belong to the extensible part of the coachwork are separated by a vertical surface to which a central partition of folding strips belongs and which is extended when the sides of the coachwork are extended.
